# FASCICULE DE BREVET EUROPEEN

(11) **EP 0 816 162 B1**
(45) Date de publication et mention de la délivrance du brevet: **04.10.2000**
(21) Numéro de dépôt: 97401361.7
(22) Date de dépôt: 16.06.1997
(51) Int. Cl.: B60N 2/44

(54) **Elément de siège de véhicule comportant une coiffe tendue sur une armature métallique**
Fahrzeugsitzelement mit einer auf eine Metallarmatur aufgespannten Haube
Vehicle seat element having a cover attached to a metallic framework

(30) Priorité: 19.06.1996 FR 9607627
(43) Date de publication de la demande: 07.01.1998
(73) Titulaire: BERTRAND FAURE EQUIPEMENTS S.A., 92100 Boulogne (FR)
(72) Inventeur: Cayet, Alain, 78000 Versailles (FR); Michot, Nicolas, 28200 Chateaudun (FR)
(74) Mandataire: Burbaud, Eric

(56) Documents cités:
- EP-A- 0 597 756
- WO-A-94/26655
- FR-A- 1 601 041
- FR-A- 2 590 284
- GB-A- 2 060 367
- US-A- 4 396 227

## Description

L'invention est relative aux éléments de sièges de véhicules comportant une coiffe tendue sur une armature métallique.

Plus particulièrement, l'invention concerne un élément de siège présentant extérieurement :
- une première face principale, destinée à servir d'appui à un utilisateur du siège,
- une deuxième face principale opposée à la première face principale et séparée de cette première face principale par une certaine épaisseur,
- et quatre côtés reliant entre elles les première et deuxième faces principales et définissant l'épaisseur de l'élément de siège,
ledit élément de siège comportant une matelassure qui est supportée par une armature métallique s'étendant le long des quatre côtés de l'élément de siège, et qui est recouverte par une coiffe extérieure souple, laquelle coiffe présente, d'une part, une zone centrale qui forme la première face principale de l'élément de siège et, d'autre part, des premier, deuxième, troisième et quatrième pans latéraux qui forment les côtés de l'élément de siège, au moins les premier et deuxième pans latéraux, qui correspondent à deux côtés opposés du premier élément de siège, présentant chacun un bord libre au voisinage duquel sont ménagées des boutonnières, ces boutonnières étant engagées sur des organes d'accrochage, dits organes d'accrochage principaux, qui sont solidaires de l'armature et qui sont disposés au voisinage de la deuxième face principale de l'élément de siège, en tendant ainsi la coiffe sur la matelassure et sur l'armature.

Par "boutonnière", on entend de façon générale tout orifice ménagé dans la coiffe et pouvant recevoir un organe d'accrochage pour fixer la coiffe.

Un exemple de siège de ce type est divulgué dans le document FR-A-1 601 041.

Dans le siège divulgué par ce document, les bords libres des pans latéraux de la coiffe forment des ourlets qui contiennent un câble de renforcement, de sorte que ces bords libres sont coûteux à réaliser.

Par ailleurs, les organes d'accrochage du siège divulgué par le document susmentionné sont constitués par des pointes triangulaires de forme agressive qui d'une part peuvent blesser les opérateurs amenés à manipuler l'armature de l'assise pendant la fabrication du siège et notamment lors du montage de la coiffe, et qui d'autre part ont tendance à abîmer la coiffe, notamment si cette coiffe est réalisée en un matériau qui ne présente pas une raideur ou une solidité très grande.

Cette détérioration de la coiffe par les organes d'accrochage peut conduire assez rapidement à détendre la coiffe, ce qui est à éviter absolument.

Pour éviter cet inconvénient, on est généralement conduit :
- d'une part, à proscrire l'utilisation de certains matériaux pour la réalisation de la coiffe, lorsque ces matériaux ne sont pas assez solides pour résister aux agressions des organes d'accrochage en forme de pointes triangulaires,
- et d'autre part, à utiliser, pour renforcer les bords libres de la coiffe, des câbles relativement rigides insérés dans les ourlets susmentionnés, voire des tringles métalliques rigides.

L'utilisation de câbles ou tringles rigides entraîne, d'une part, une augmentation supplémentaire du coût de la coiffe, et d'autre part, une rigidification des bords libres de cette coiffe, ce qui complique notablement les opérations de mise en place de la coiffe lors de la fabrication du siège.

Un autre exemple de siège de véhicule avec un élément de siège comportant une coiffe est connu du document EP-A-0 597 756, appartenant à la Demanderesse. Ce document décrit notamment un cordon souple inextensible qui est cousu directement le long du bord de la coiffe d'une assise de siège ainsi que des boutons-pression solidaires de la coiffe (c'est-à-dire les éléments 17a visibles sur les figures 2 et 4 de ce document).

La présente invention a notamment pour but de pallier les divers inconvénients susmentionnés.

A cet effet, selon l'invention, un siège du genre en question est caractérisé :
- en ce que le bord libre de chacun des premier et deuxième pans latéraux de la coiffe est renforcé par un cordon souple inextensible qui ne présente sensiblement aucune rigidité vis-à-vis du pliage, ce cordon étant fixé à la coiffe au moyen d'une couture et s'étendant sensiblement sans pli le long dudit bord libre, entre les boutonnières et ce bord libre,
- et en ce que chaque organe d'accrochage principal est dépourvu d'arête vive susceptible de couper la coiffe.

Grâce à ces dispositions, le bord libre des pans latéraux de la coiffe est suffisamment renforcé pour résister efficacement et durablement aux efforts de traction induits par l'accrochage de la coiffe, compte tenu de la non-aggressivité des organes d'accrochage de cette coiffe.

De plus, les bords libres de la coiffe conservent leur souplesse, de sorte qu'ils se prêtent bien aux diverses manipulations nécessaires pour mettre en place cette coiffe lors de la fabrication du siège.

Dans des modes de réalisation préférés, on peut éventuellement avoir recours en outre à l'une et/ou à l'autre des dispositions suivantes :
- au moins les premier et deuxième pans latéraux de la coiffe se retournent sur l'armature et s'étendent en partie sur la deuxième face principale de l'élément de siège, jusqu'aux organes d'accrochage principaux ;
- les premier, deuxième, troisième et quatrième pans latéraux de la coiffe s'étendent continûment le long de trois côtés contigus de l'élément de siège, les troisième et quatrième pans latéraux présentant chacun un bord libre d'extrémité qui s'étend sensiblement selon l'épaisseur de l'élément de siège et qui est voisin du deuxième pan latéral de la coiffe, chacun de ces troisième et quatrième pans latéraux présentant une boutonnière au voisinage de son bord libre d'extrémité, lequel bord libre d'extrémité est renforcé par un cordon souple inextensible qui ne présente sensiblement aucune rigidité vis-à-vis du pliage, ce cordon étant fixé à la coiffe au moyen d'une couture et s'étendant sensiblement sans pli le long dudit bord libre d'extrémité, entre la boutonnière correspondante et ce bord libre d'extrémité, ladite boutonnière étant engagée sur un organe d'accrochage, dit organe d'accrochage auxiliaire, qui est solidaire de l'armature et qui est dépourvu d'arête vive susceptible de couper la coiffe ;
- le bord libre du premier pan latéral est renforcé par le même cordon inextensible que les bords libres d'extrémité des troisième et quatrième pans latéraux, lequel cordon longe les premier, troisième et quatrième pans latéraux le long des trois côtés correspondants de l'élément de siège ;
- les organes d'accrochage auxiliaires sont disposés sur le côté de l'élément de siège qui correspond au deuxième pan latéral de la coiffe ;
- le cordon inextensible est un cordon textile ;
- l'armature est au moins partiellement réalisée en tôle, les organes d'accrochage étant constitués par des pattes découpées dans cette armature et ébavurées ;
- les organes d'accrochage sont constitués chacun par une patte aplatie qui s'étend longitudinalement à partir de l'armature, jusqu'à un bout élargi à formes arrondies,
- l'élément de siège constitue une assise, les première et deuxième faces principales constituant des faces respectivement supérieure et inférieure de cette assisse.

D'autres caractéristiques et avantages de l'invention apparaîtront au cours de la description détaillée suivantes d'une de ses formes de réalisation, donnée à titre d'exemple non limitatif, en regard des dessins joints.

Sur les dessins :
- la figure 1 est une vue schématique d'ensemble d'un siège selon une forme de réalisation de l'invention,
- la figure 2 est une vue schématique du dessous de l'assise appartenant au siège de la figure 1,
- la figure 3 est une vue schématique du cadre de l'assise représentée sur la figure 2,
- et la figure 4 est une vue de détail de l'arrière de l'assise représentée sur la figure 2.

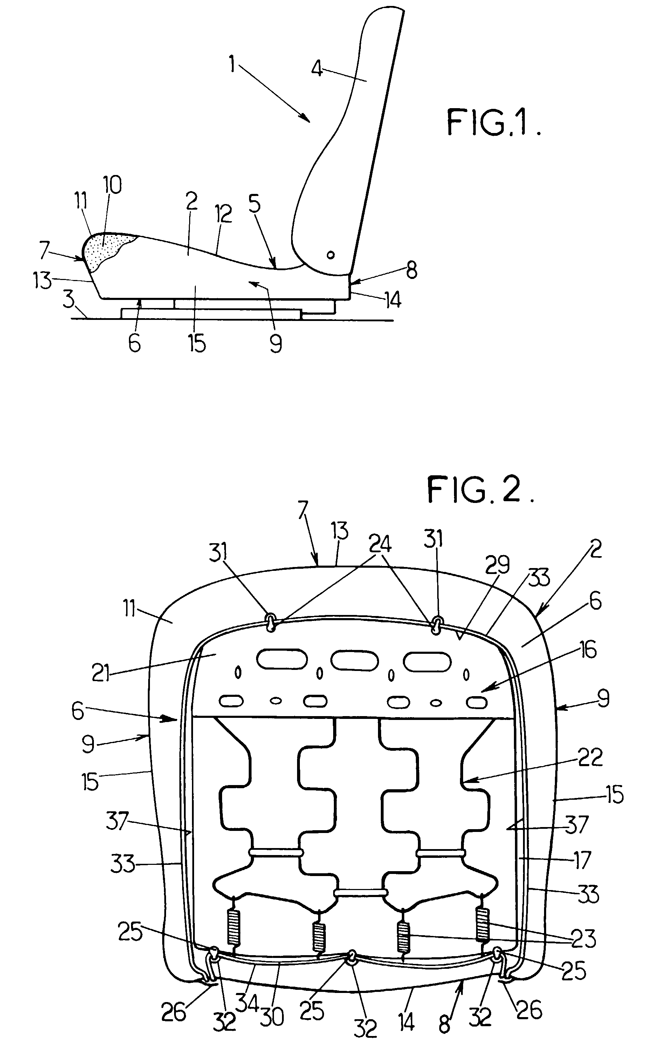

Comme représenté sur la figure 1, l'invention concerne un siège 1 de véhicule qui comprend, d'une part, une assise 2, montée sur le plancher 3 du véhicule, et d'autre part, un dossier 4 lui-même fixé sur l'assise.

L'assise 2 du siège présente :
- une face supérieure 5, sur laquelle s'assoit l'occupant du siège,
- une face inférieure 6 séparée de la face supérieure 5 par une certaine épaisseur,
- et quatre côtés reliant entre elles les faces supérieures et inférieures 5, 6 et définissant l'épaisseur de l'assise, savoir un côté avant 7, un côté arrière 8, et deux côtés longitudinaux 9.

L'assise 2 comporte une matelassure qui est généralement constituée par un coussin en matériau synthétique et qui est recouverte par une coiffe 11 en matériau souple, notamment en tissu, en tricot, en cuir, en matériau synthétique similaire à du cuir, ou autres.

Cette coiffe 11 se compose d'une zone centrale 12 qui forme la face supérieure 5 de l'assise, et de quatre pans latéraux, savoir :
- un pan latéral avant 13 qui forme le côté avant 7 de l'assise,
- un pan latéral arrière 14 qui forme le côté arrière 8 de l'assise,
- et deux pans latéraux longitudinaux 15 qui forment les deux côtés longitudinaux 9 de l'assise.

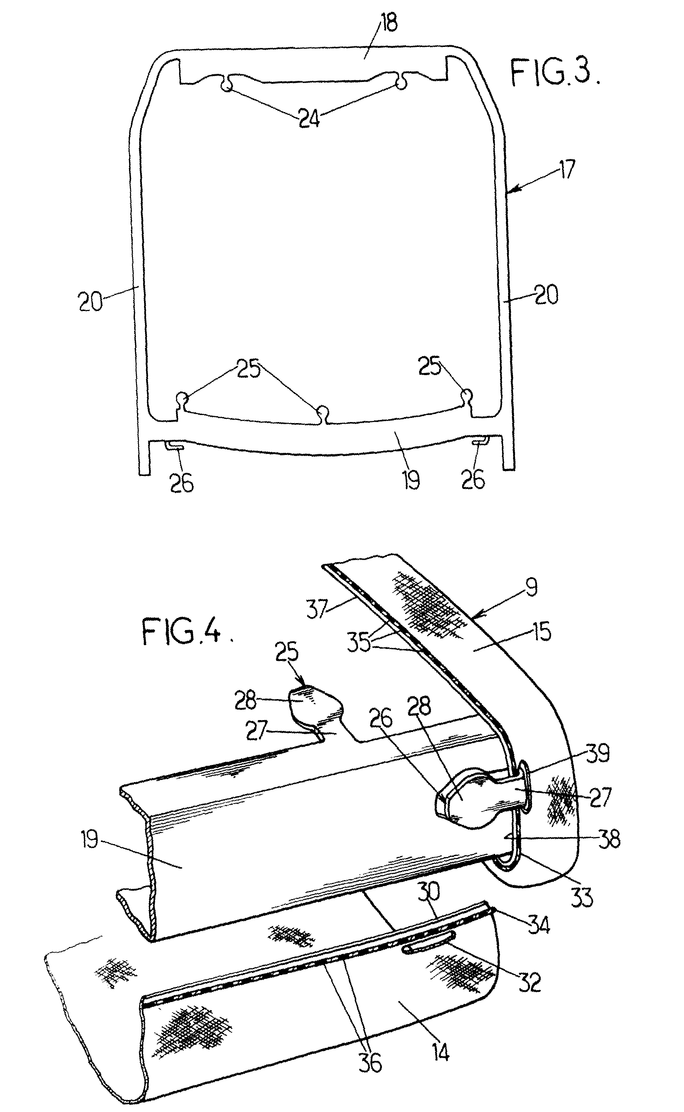

Par ailleurs, la matelassure 10 de l'assise est supportée par une armature métallique 16 qui est bien visible sur les figures 2 et 3 et qui est disposée au niveau de la face inférieure 6 de l'assise.

Cette armature métallique 16 comporte un cadre rigide 17 qui s'étend le long des quatre côtés de l'assise et qui comprend une traverse avant 18, une traverse arrière 19, et deux longerons longitudinaux 20 (figure 3).

Au centre du cadre 17, l'armature 16 comprend en outre, dans l'exemple particulier représenté sur les dessins :
- une plaque métallique rigide 21 qui est fixée au cadre 17 au voisinage de la traverse avant 18,
- et une nappe horizontale 22 de fils métalliques élastiques qui est d'une part accrochée à la plaque 21, et d'autre part tendue par des ressorts 23 eux-mêmes accrochés à la traverse arrière 19 (figure 2).

Le cadre rigide 17 est réalisé en tôle, et cette tôle est localement découpée de façon à former des pattes d'accrochage de la coiffe (figure 2 à 4), savoir :
- deux pattes d'accrochage 24 qui s'étendent vers l'arrière à partir de la traverse avant 18,
- trois pattes d'accrochage 25 qui s'étendent vers l'avant à partir de la traverse arrière 19,
- et deux pattes d'accrochage 26, qui sont formées sur le côté extérieur de la traverse arrière 19 au voisinage des deux longerons longitudinaux 20 du cadre, ces pattes 26 étant dirigées l'une vers l'autre.

Chacune des pattes 24, 25, 26 est ébavurée après avoir été découpée, de façon à ne pas blesser la coiffe 11.

De plus, chacune des pattes 24, 25, 26 présente des formes arrondies, ou tout au moins dépourvues d'angles aigus, toujours dans le but de ne pas blesser la coiffe 11.

De préférence, chacune des pattes 24, 25, 26 présente d'abord un tronçon 27 (figure 4) relativement étroit qui s'étend à partir du cadre 17, ce tronçon étroit 27 étant prolongé par un bout élargi 28 dont l'utilité sera vue plus loin.

Comme on peut le voir clairement sur les figures 2 et 4, les pans latéraux avant 13 et arrière 14 de la coiffe se retournent respectivement sur les traverses avant et arrière 18, 19 du cadre et s'étendent partiellement sur la face inférieure 6 de l'assise, jusqu'à des bords libres, respectivement 29, 30.

Au voisinage de ces bords libres 29, 30 sont ménagées des boutonnières, respectivement 31, 32, dans lesquelles sont engagées respectivement les pattes 24, 25.

Grâce à cette disposition, la zone centrale 12 de la coiffe est tendue sur la garniture 10 en mousse.

Afin de renforcer les bords libres 29, 30 des pans latéraux 13, 14 de la coiffe, deux cordons souples inextensibles 33, 34 sont fixés respectivement le long des bords libres 29, 30 au moyen de coutures, respectivement 35, 36. Ces cordons s'étendent sensiblement sans pli le long desdits bords libres 29, 30, entre les boutonnières 31, 32 et ces bords libres.

Les cordons souples inextensibles 35, 36 peuvent être par exemple des cordons textiles, et en particulier des cordons tressés.

De préférence, les deux pans latéraux longitudinaux 15 de la coiffe sont reliés sans discontinuité au pan latéral avant 13, et le cordon 33 s'étend continûment non seulement le long du bord libre 29 du pan latéral avant 13, mais également le long des bords libres longitudinaux 37 des deux pans latéraux longitudinaux 15.

De plus, ce cordon 33 se prolonge également le long d'un bord libre d'extrémité 38 de chaque pan latéral longitudinal 15, lequel bord libre d'extrémité s'étend dans le sens de l'épaisseur de l'assise au voisinage du pan latéral arrière 14 de la coiffe.

Chacun des pans latéraux longitudinaux 15 comporte en outre, au voisinage de son bord libre d'extrémité 38, une boutonnière 39 qui est engagée sur l'une des pattes d'accrochage 26, le cordon souple 33 étant cousu entre cette boutonnière 39 et le bord libre d'extrémité 38.

De cette façon, la partie avant de la coiffe de l'assise 2 est tendue vers l'arrière contre le "nez" de l'assise.

Comme il va de soi, et comme il résulte d'ailleurs de ce qui précède, l'invention n'est pas limitée à la forme de réalisation particulière qui vient d'être décrite ; elle en embrasse notamment les variantes dans lesquelles le dossier 4 comporterait une coiffe fixée à l'armature de ce dossier de façon similaire à ce qui vient d'être décrit pour la coiffe de l'assise, la face arrière étant alors recouverte par une coque en matière plastique ou par un autre cache.

## Revendications

1. Elément de siège (2) présentant extérieurement :
- une première face principale (5), destinée à servir d'appui à un utilisateur du siège,
- une deuxième face principale (6) opposée à la première face principale et séparée de cette première face principale par une certaine épaisseur,
- et quatre côtés (7-9) reliant entre elles les première et deuxième faces principales (5, 6) et définissant l'épaisseur de l'élément de siège,
ledit élément de siège (2) comportant une matelassure (10) qui est supportée par une armature métallique (16) s'étendant au moins le long des quatre côtés de l'élément de siège, et qui est recouverte par une coiffe extérieure (11) souple, laquelle coiffe présente, d'une part, une zone centrale (12) qui forme la première face principale de l'élément de siège et, d'autre part, des premier, deuxième, troisième et quatrième pans latéraux (13-15) qui forment les côtés de l'élément de siège, au moins les premier et deuxième pans latéraux (13, 14), qui correspondent à deux côtés opposés (7, 8) de l'élément de siège, présentant chacun un bord libre (29, 30) au voisinage duquel sont ménagées des boutonnières (31, 32), ces boutonnières étant engagées sur des organes d'accrochage (24, 25) dits organes d'accrochage principaux, qui sont solidaires de l'armature (16) et qui sont disposés au voisinage de la deuxième face principale (6) de l'élément de siège, en tendant ainsi la coiffe (11) sur la matelassure (10) et sur l'armature (16),
**caractérisé en que** le bord libre (29, 30) de chacun des premier et deuxième pans latéraux de la coiffe est renforcé par un cordon souple inextensible (33, 34) qui ne présente sensiblement aucune rigidité vis-à-vis du pliage, ce cordon étant fixé à la coiffe au moyen d'une couture (35, 36) et s'étendant sensiblement sans pli le long dudit bord libre (29, 30), entre les boutonnières (31, 32) et ce bord libre,
**et en ce que** chaque organe d'accrochage principal (24, 25) est dépourvu d'arête vive susceptible de couper la coiffe (11).

2. Elément de siège selon la revendication 1, dans lequel au moins les premier et deuxième pans latéraux (13, 14) de la coiffe se retournent sur l'armature (16) et s'étendent en partie sur la deuxième face principale (6) de l'élément de siège (2), jusqu'aux organes d'accrochage principaux (24, 25).

3. Elément de siège selon l'une quelconque des revendications 1 et 2, dans lequel les premier, deuxième, troisième et quatrième pans latéraux (13, 15) de la coiffe s'étendent continûment le long de trois côtés contigus (7, 9) de l'élément de siège (2), les troisième et quatrième pans latéraux (15) présentant chacun un bord libre d'extrémité (38) qui s'étend sensiblement selon l'épaisseur de l'élément de siège (2) et qui est voisin du deuxième pan latéral (14) de la coiffe, chacun de ces troisième et quatrième pans latéraux (15) présentant une boutonnière (39) au voisinage de son bord libre d'extrémité (38), lequel bord libre d'extrémité est renforcé par un cordon souple inextensible (33) qui ne présente sensiblement aucune rigidité vis-à-vis du pliage, ce cordon étant fixé à la coiffe (11) au moyen d'une couture (35) et s'étendant sensiblement sans pli le long dudit bord libre d'extrémité, entre la boutonnière correspondante (39) et ce bord libre d'extrémité, ladite boutonnière étant engagée sur un organe d'accrochage (26), dit organe d'accrochage auxiliaire, qui est solidaire de l'armature (16) et qui est dépourvu d'arête vive susceptible de couper la coiffe.

4. Elément de siège selon la revendication 3, dans lequel le bord libre (29) du premier pan latéral est renforcé par le même cordon inextensible (33) que les bords libres d'extrémité (38) des troisième et quatrième pans latéraux (15), lequel cordon longe les premier, troisième et quatrième pans latéraux (13, 15) le long des trois côtés correspondants de l'élément de siège.

5. Elément de siège selon l'une quelconque des revendications 3 et 4, dans lequel les organes d'accrochage auxiliaires (26) sont disposés sur le côté de l'élément de siège qui correspond au deuxième pan latéral (14) de la coiffe.

6. Elément de siège selon l'une quelconque des revendications précédentes, dans lequel le cordon inextensible (33, 34) est un cordon textile.

7. Elément de siège selon l'une quelconque des revendications précédentes, dans lequel l'armature (16) est au moins partiellement réalisée en tôle, les organes d'accrochage (24, 25, 26) étant constitués par des pattes découpées dans cette armature et ébavurées.

8. Elément de siège selon l'une quelconque des revendications précédentes, dans lequel les organes d'accrochage (24, 25, 26) sont constitués chacun par une patte aplatie qui s'étend longitudinalement à partir de l'armature (16), jusqu'à un bout élargi (28) à formes arrondies.

9. Elément de siège selon l'une quelconque des revendications précédentes, constituant une assise (2), les première et deuxième faces principales (5, 6) constituant des faces respectivement supérieure et inférieure de cette assise.

## Patentansprüche

1. Sitzelement (2), das außen folgendes aufweist:
- eine erste Hauptfläche (5), die einem Benutzer des Sitzes als Sitzfläche dient,
- eine zweite Hauptfläche (6), die der ersten Hauptfläche gegenüberliegt und durch eine bestimmte Dicke von ihr getrennt ist, und
- vier Seiten (7-9), die die erste und zweite Hauptfläche (5, 6) miteinander verbinden und die Dicke des Sitzelementes festlegen,
wobei das Sitzelement (2) eine Polsterung (10) aufweist, die von einem Gestell (16) aus Metall getragen wird, das sich mindestens über die Länge der vier Seiten des Sitzelementes erstreckt, wobei die Polsterung außen mit einem dehnbaren Bezug (11) überzogen ist, der zum einen einen mittleren Bereich (12) aufweist, welcher die erste Hauptfläche des Sitzelements bildet, und zum anderen erste, zweite, dritte und vierte Seitenbahnen (13-15), die die Seiten des Sitzelementes bilden, wobei mindestens die erste und zweite Seitenbahn (13, 14), die zwei gegenüberliegenden Seiten (7, 8) des Sitzelementes entsprechen, jeweils eine freie Kante (29, 30) aufweisen, in deren Nähe Knopflöcher (31, 32) vorgesehen sind, die mit so genannten Haupt-Befestigungsvorrichtungen (24, 25) verbunden sind, die mit dem Gestell (16) fest verbunden und in der Nähe der zweiten Hauptfläche (6) des Sitzelements angeordnet sind, so dass der Bezug (11) auf der Polsterung (10) und auf dem Gestell (16) gespannt wird,
**dadurch gekennzeichnet, dass** die freie Kante (29, 30) der ersten und zweiten Seitenbahn des Bezugs jeweils durch eine biegsame, nicht dehnbare Schnur (33, 34) verstärkt ist, die im wesentlichen leicht faltbar ist, wobei die Schnur mittels einer Naht (35, 36) am Bezug befestigt ist und im wesentlichen ohne Knick entlang der freien Kante (29, 30) zwischen den Knopflöchern (31, 32) und der freien Kante verläuft, und
**dass** keine der Haupt-Befestigungsvorrichtungen (24, 25) eine scharfe Kante aufweist, die in den Bezug (11) schneiden könnte.

2. Sitzelement nach Anspruch 1, bei dem mindestens die erste und zweite Seitenbahn (13, 14) des Bezugs über das Gestell (16) geschlagen sind und sich teilweise über die zweite Hauptfläche (6) des Sitzelements (2) bis zu den Haupt-Befestigungsvorrichtungen (24, 25) erstrecken.

3. Sitzelement nach Anspruch 1 oder 2, bei dem sich die erste, zweite, dritte und vierte Seitenbahn (13, 15) des Bezugs ohne Unterbrechung entlang der drei aneinander stoßenden Seiten (7, 9) des Sitzelements (2) erstrecken, wobei die dritte und vierte Seitenbahn (15) jeweils eine freie Endkante (38) aufweisen, die sich im wesentlichen entlang der Dicke des Sitzelements (2) erstreckt und an die zweite Seitenbahn (14) des Bezugs angrenzt, wobei die dritte und vierte Seitenbahn (15) jeweils ein Knopfloch (39) in der Nähe ihrer freien Endkante (38) aufweisen, die durch eine biegsame nicht dehnbare Schnur (33) verstärkt ist, welche im wesentlichen leicht faltbar ist, wobei die Schnur mittels einer Naht (35) am Bezug (11) befestigt ist und im wesentlichen ohne Knick entlang der freien Endkante zwischen dem entsprechenden Knopfloch (39) und der freien Endkante verläuft, wobei das Knopfloch mit einer so genannten Hilfs-Befestigungsvorrichtung (26) verbunden ist, die mit dem Gestell (16) fest verbunden ist und keine scharfe Kante besitzt, die in den Bezug schneiden könnte.

4. Sitzelement nach Anspruch 3, bei dem die freie Kante (29) der ersten Seitenbahn von derselben nicht dehnbaren Schnur (33) verstärkt wird wie die freien Endkanten (38) der dritten und vierten Seitenbahn (15), wobei die Schnur an der ersten, dritten und vierten Seitenbahn (13, 15) an den drei entsprechenden Seiten des Sitzelements entlang verläuft.

5. Sitzelement nach Anspruch 3 oder 4, bei dem die Hilfs-Befestigungsvorrichtungen (26) an der Seite des Sitzelements angeordnet sind, die der zweiten Seitenbahn (14) des Bezugs entspricht.

6. Sitzelement nach einem der vorhergehenden Ansprüche, bei dem die nicht dehnbare Schnur (33, 34) eine Textilschnur ist.

7. Sitzelement nach einem der vorhergehenden Ansprüche, bei dem das Gestell (16) zumindest teilweise aus Blech ist, wobei die Befestigungsvorrichtungen (24, 25, 26) aus Lappen gebildet sind, die aus dem Gestell ausgeschnitten und entgratet wurden.

8. Sitzelement nach einem der vorhergehenden Ansprüche, bei dem die Befestigungsvorrichtungen (24, 25, 26) jeweils von einem abgeflachten Lappen gebildet sind, der sich der Länge nach vom Gestell (16) aus bis zu einem verbreiterten Ende (28) mit abgerundeter Form erstreckt.

9. Sitzelement nach einem der vorhergehenden Ansprüche, das ein Sitzkissen (2) bildet, wobei die erste und zweite Hauptfläche (5, 6) die obere beziehungsweise untere Fläche dieses Sitzkissens darstellen.

## Claims

1. A seat element (2) presenting, externally:
• a first main face (5) for supporting a user of the seat;
• a second main face (6) at a distance from the first main face and separated from said first main face by a certain thickness; and
• four sides (7-9) interconnecting the first and second main faces (5, 6) and defining the thickness of the seat element,
said seat element (2) including padding (10) supported by metal reinforcement (16) extending at least along the four sides of the seat element, and covered by a flexible outer cover (11), which cover presents firstly a central zone (12) forming the first main face of the seat element and secondly, first, second, third, and fourth lateral panels (13-15) forming the sides of the seat element, at least the first and second lateral panels (13, 14) which correspond to two opposite sides (7, 8) of the seat element having respective free edges (29, 30) in the vicinity of which there are formed buttonholes (31, 32), said buttonholes being engaged on fastening members (24, 5) referred to as "main" fastening members, which are secured to the reinforcement (16) and which are disposed in the vicinity of the second main face (6) of the seat element, thereby tensioning the cover (11) over the padding (10) and the reinforcement (16),
the seat element being **characterized in that** the free edge (29, 30) of each of the first and second lateral panels of the cover is reinforced by an inextensible flexible cord (33, 34) which has practically no stiffness against folding, said cord being fixed to the cover by means of stitching (35, 36) and extending substantially without folds along said free edge (29, 30) between the buttonholes (31, 32) of said free edge; and
**in that** each main fastening member (24, 25) has no sharp edge liable to cut into the cover (11).

2. A seat element according to claim 1, in which at least the first and second lateral panels (13, 14) of the cover are folded over the reinforcement (16) and extend in part over the second main face (6) of the seat element (2) as far as the main fastening members (24, 25).

3. A seat element according to claim 1 or 2, in which the first, second, third, and fourth lateral panels (13, 15) of the cover extend continuously along three continuous sides (7, 9) of the seat element (2), the third and fourth lateral panels (15) each presenting an end free edge (38) that extends substantially along the thickness of the seat element (2) and which is adjacent to the second lateral panel (14) of the cover, each of the third and fourth lateral panels (15) having a buttonhole (39) in the vicinity of its end free edge (38), which end free edge is reinforced by an inextensible flexible cord (33) which has practically no stiffness against folding, said cord being fixed to the cover (11) by means of stitching (35) and extending substantially without folds along said end free edge, between the corresponding buttonhole (39) and said end free edge, said buttonhole being engaged on a fastening member (26), referred to as an "auxiliary" fastening member, which member is secured to the reinforcement (16) and does not have any sharp edges liable to cut into the cover.

4. A seat element according to claim 3, in which the free edge (29) of the first lateral panel is reinforced by the same inextensible cord (33) as are the end free edges (38) of the third and fourth lateral panels (15), which cord runs along the first, third, and fourth lateral panels (13, 15) along the corresponding three sides of the seat element.

5. A seat element according to claim 3 or 4, in which the auxiliary fastening members (26) are disposed on the side of the seat element corresponding to the second lateral panel (14) of the cover.

6. A seat element according to any preceding claim, in which the inextensible cord (33, 34) is a textile cord.

7. A seat element according to any preceding claim, in which the reinforcement (16) is made at least in part out of sheet metal, the fastening members (24, 25, 26) being constituted by tabs cut out in said reinforcement and being deburred.

8. A seat element according to any preceding claim, in which each fastening member (24, 25, 26) is constituted by a flat tab extending longitudinally from the reinforcement (16) to an enlarged head (28) of rounded shape.

9. A seat element according to any preceding claim, constituting a seat proper (2), the first and second main faces (5, 6) constituting respectively the top face and the bottom face of the seat proper.
